# EUROPÄISCHE PATENTANMELDUNG

(11) **EP 3 163 527 A1**
(43) Veröffentlichungstag der Anmeldung: **03.05.2017**
(21) Anmeldenummer: 16189992.7
(22) Anmeldetag: 21.09.2016
(51) Int. Cl.: G06Q 20/34

(54) **WERTKARTE UND ZUGEHÖRIGES WERTKARTENSYSTEM**

(30) Priorität: 29.10.2015 DE 202015105766 U
(71) Anmelder: Wegmann, Rainer, 44651 Herne (DE)
(72) Erfinder: Wegmann, Rainer, 44651 Herne (DE)
(74) Vertreter: Nunnenkamp, Jörg

(57) **Zusammenfassung**

Gegenstand der Erfindung ist eine elektronische Wertkarte, die mit wenigstens einem Speicher (2), dessen Wertinhalt (W) an einer Akzeptanzstelle (6) auf- bzw. abgewertet wird, ausgerüstet ist. Erfindungsgemäß sind als Wertinhalt (W) ausschließlich Sachleistungen mit vorgegebenem Umfang im Speicher (1) hinterlegt.

## Beschreibung

Die Erfindung betrifft eine elektronische Wertkarte, mit wenigstens einem Speicher, dessen Werteinhalt an einer Akzeptanzstelle auf- bzw. abgewertet wird.

Wertkarten in Gestalt von Geldkarten werden in der Praxis unter anderem dafür eingesetzt, Dienstleistungen wie beispielsweise Parkplatzgebühren, Schwimmbadgebühren etc. zu bezahlen. Dazu wird die betreffende Wertkarte mit einer zuvor vorgegebenen Anzahl an Besuchen aufgeladen. Die in diesem Zusammenhang abgespeicherten Dienstleistungen müssen innerhalb eines bestimmten Zeitfensters abgerufen werden. Dadurch wird der Kunde einerseits unter Druck gesetzt, was die Entwertung der Karte angeht und andererseits vor etwaigen Preissteigerungen während der Nutzungsdauer geschützt. Das hat sich bewährt.

Daneben gibt es allgemein Geldkarten oder Datenträgerkarten, wie sie beispielsweise in der DE 100 16 716 A1 beschrieben werden. An dieser Stelle ist die Datenträgerkarte für eine kontaktlose Datenübertragung geeignet und ertüchtigt. Hier geht es darum, eine Abbuchung nur dann erfolgen zu lassen, wenn eine ausdrückliche Willenserklärung des Benutzers vorliegt. Dazu sind zwei von außerhalb der Chipkarte zugängliche Kontaktflächen vorgesehen, um in Abhängigkeit von einem zwischen den Kontaktflächen abgreifbaren Signal die betreffende Servicefunktion freizuschalten oder zu blockieren.

Die DE 10 2005 008 258 A1 beschreibt ebenfalls eine ähnliche und gattungsgemäße Wertkarte in Gestalt eines Datenträgers. Dieser ist mit einer Einrichtung zum Erzeugen von Einmalpasswörtern und mit einem Display zum Wiedergeben von erzeugten Einmalpasswörtern ausgerüstet. Dadurch soll insgesamt die Sicherheit gesteigert werden.

Im Rahmen der DE 199 37 702 C1 geht es um ein geschlossenes Wertkartensystem mit einer Mehrzahl von systemeigenen Akzeptanzstellen. Die Akzeptanzstellen weisen mindestens eine den Kartenwert vermindernde Abwertestation und/oder mindestens eine den Kartenwert erhöhende Aufwertestation auf. Mithilfe eines Protokollspeichers lassen sich kurzzeitig gespeicherte Protokolle aufnehmen und entsprechende Kontobewegungen realisieren. Dadurch wird das bekannte Wertkartensystem derart ertüchtigt, dass zu unterschiedlichen Betreibern gehörige Akzeptanzstellen berücksichtigt werden können.

Die DE 10 2011 079 317 A1 beschreibt schließlich ein mobiles System für Finanztransaktionen. Hier ist eine erste und eine zweite Autorisierungsvorrichtung vorgesehen, um die Kommunikation insgesamt sicherer zu machen. Außerdem wird eine ortsunabhängige Ausführung mit hohem Datenschutz gewährleistet.

Der Stand der Technik hat sich insgesamt bewährt, was den Einsatz und die Verwendung von Geldkarten und entsprechenden Guthabenbeträgen sowie ihr Aufladen angeht. Außerdem sind mit einer Anzahl an Dienstleistungen ausgerüstete Wertkarten im Umlauf, die Schritt für Schritt entwertet werden müssen. Eine gleichzeitige Entwertung ist bei diesen Dienstleistungskarten naturgemäß nicht möglich. Vor diesem Hintergrund besteht ein Bedürfnis im Markt danach, nicht nur Geldbeträge und Dienstleistungen mit einer Wertkarte zur Verfügung zu stellen, sondern diese mit Zusatzfunktionen auszurüsten.

Der Erfindung liegt das technische Problem zugrunde, eine Wertkarte so weiter zu entwickeln, dass alternativ zu der Geldkartenfunktion und Dienstleistungsspeicherung auch die Möglichkeit besteht, Zusatzfunktionen darstellen zu können.

Zur Lösung dieser technischen Problemstellung ist eine gattungsgemäße Wertkarte im Rahmen der Erfindung dadurch gekennzeichnet, dass als Werteinhalt ausschließlich Sachleistungen mit vorgegebenem Umfang im Speicher hinterlegt sind.

Das heißt, erfindungsgemäß verfügt die Wertkarte über einen speziellen Werteinhalt. Dieser manifestiert sich ausdrücklich nicht in Geldbeträgen und auch nicht in hinterlegten Dienstleistungen wie beispielsweise Parkplatz- oder Schwimmbadbesuchen. Vielmehr sind als Werteinhalt im Speicher ausschließlich Sachleistungen mit vorgegebenem Umfang hinterlegt.

Bei den Sachleistungen kann es sich um jedwede Sachgüter handeln, beispielsweise Geräte, wie Haushaltsgeräte, Hifigeräte, Bücher, Fahrräder etc. oder aber auch Verbrauchsgüter wie Benzinmengen, Getränkemengen, Gerichte etc.. Das heißt, im Gegensatz zum Stand der Technik ist auf der Wertkarte nicht ein bestimmter Geldbetrag zum Kauf der betreffenden Sachleistung hinterlegt, sondern vielmehr die Sachleistung selbst.

Dadurch fungiert die erfindungsgemäße Wertkarte wie eine Art Spekulationsobjekt und stellt für sich genommen eine Handelsware dar. Denn der "Wert" der auf der Wertkarte hinterlegten Sachleistung kann durchaus schwanken. Das ist gewollt. So ist es beispielsweise denkbar, dass als Sachleistung eine Menge von 50 I Superbenzin hinterlegt ist. Je nach dem, wann diese Sachleistung von dem Benutzer der Wertkarte erworben wurde, kann der Wert dieser Benzinmenge über die Zeit gesehen schwanken. Gleiches gilt für Geräte, hinterlegte Speisen etc.

Der besondere Vorteil der solchermaßen konzipierten erfindungsgemäßen Wertkarte ist darin zu sehen, dass die Sachleistung als Gegenwert über die Wertkarte jederzeit innerhalb eines bestimmten Zeitraumes abgerufen werden kann. Insofern lassen sich hierdurch aus Kundensicht Preisschwankungen ausgleichen und Zeiten niedriger Kundenfrequenz nutzen, was insgesamt die Kundenzufriedenheit deutlich steigert.

So ist es beispielsweise bei Tankstellen bekannt, dass der Benzinpreis tageszeitabhängig schwankt. Preisbewusste Kunden, die diese Preisschwankungen kennen und ausnutzen, treffen als Folge hiervon auf eine hohe Nachfrage zu Zeiten eines niedrigen Preises, während im Zeitraum hoher Preise eine deutlich geringere Kundenfrequenz beobachtet wird. Mithilfe der erfindungsgemäßen Wertkarte kann nun ein Kunde beispielsweise ein bestimmtes Tankvolumen während einer Niedrigpreisphase einkaufen und den Tank aber erst während der Hochpreisphase mit der hinterlegten Benzinmenge befüllen. Dadurch werden insgesamt Belastungsspitzen bei den Tankstellen abgemildert und vergleichmäßigt, so dass nicht nur die Kundenzufriedenheit steigt, sondern auch die Belastungen des Tankstellenpersonals deutlich sinken.

Vergleichbare Effekte werden beispielsweise auch bei Elektrogeräten wie Fernsehern, Computern, Mobiltelefonen etc. beobachtet. Auch diese Produkte unterliegen mehr oder minder ausgeprägten Preisschwankungen und entsprechenden Nachfragespitzen. Diese Nachfragespitzen können mithilfe der erfindungsgemäßen Wertkarte deutlich abgemildert werden, weil der Kunde nicht (mehr) gezwungen ist oder sogar genötigt wird, bei beispielsweise einer Rabattaktion das betreffende Gerät tatsächlich kaufen zu müssen. Vielmehr kann er die Rabattaktion dazu nutzen, die erfindungsgemäße Wertkarte mit der entsprechenden Sachleistung "aufzuladen" und die Sachleistung dann erst später abzurufen. Das hat für den Ladenbetreiber den Vorteil, dass die Verkaufszahlen ansteigen, ohne dass die entsprechenden Produkte tatsächlich am Verkaufszeitpunkt vorhanden sein müssen. Außerdem wird Liquidität ohne unmittelbare Gegenleistung zur Verfügung gestellt. Folgerichtig kommt es insgesamt zu einer Vergleichmäßigung des Kundenverhaltens und einer Steigerung der Kundenzufriedenheit sowie einer Belastungssenkung beim Personal. Hierin sind die wesentlichen Vorteile zu sehen.

Nach vorteilhafter Ausgestaltung sind die auf der erfindungsgemäßen Wertkarte hinterlegten Sachleistungen im Regelfall hinsichtlich ihres Gesamtumfangs und/oder eines oder mehrerer definierter Teilumfänge mit wenigstens einem Verfallsdatum flankiert. Das heißt, der Gesamtumfang der auf der erfindungsgemäßen Wertkarte hinterlegten Sachleistungen kann mit einem oder mit mehreren Verfallsdaten flankiert sein. Innerhalb dieser Verfallsdaten muss die entsprechende Menge an der einen oder den mehreren Sachleistungen seitens des Benutzers eingekauft worden sein. Das gilt auch für den Fall, dass auf der Wertkarte mehrere definierte Teilumfänge an der betreffenden Sachleistung oder den mehreren Sachleistungen hinterlegt sind, die jeweils mit einem eigenen Verfallsdatum flankiert sein können.

Das betreffende Verfallsdatum wird in der Regel an einer Aufwertestelle vorgegeben. Bei der Aufwertestelle handelt es sich um eine Akzeptanzstelle, welche dazu dient, die erfindungsgemäße Wertkarte mit der gewünschten Sachleistung oder den mehreren Sachleistungen aufzuladen. Bei diesem Vorgang kann automatisch für die eine oder die mehreren Sachleistungen das zugehörige Verfallsdatum im Speicher auf der Wertkarte hinterlegt werden. Alternativ oder zusätzlich lässt sich das Verfallsdatum an der betreffenden Aufwertestelle auch verlängern. Das ist in der Regel mit der Entrichtung einer zusätzlichen Gebühr möglich. Wenn beispielsweise ein Kunde mithilfe der Wertkarte 50 I Superbenzin eingekauft hat, die typischerweise mit einem Verfallsdatum von zwei Monaten nach dem Kaufdatum ausgerüstet sind, so lässt sich dieses Verfallsdatum auf beispielsweise vier Monate oder noch mehr verlängern, und zwar gegen Entrichtung einer geringen Gebühr an der betreffenden Aufwertestelle. - Selbstverständlich ist auch eine kostenlose Verlängerung zur möglich, wenn der Kunde beispielsweise gleichzeitig Sachleistungen mit entsprechendem Gegenwert einkauft.

Darüber hinaus besteht im Rahmen der Erfindung die Möglichkeit, dass auf der Wertkarte zusätzlich ein Identifizierungscode zur Authentifizierung des Nutzers im Speicher hinterlegt ist. Dieser Identifizierungscode muss in der Regel auf der Wertkarte abgespeichert werden, sobald der Kunde die Wertkarte an einer der Akzeptanzstellen erwirbt und hierauf die eine gewünschte Sachleistung oder die mehreren Sachleistungen durch Erwerben hinterlegt. Mithilfe des Identifizierungscodes kann sich der Kunde anschließend an der gewünschten Akzeptanzstelle als berechtigter Besitzer der Wertkarte ausweisen und die im Speicher hinterlegte Sachleistung respektive die mehreren Sachleistungen an der Akzeptanzstelle erwerben. Dazu ist die betreffende Akzeptanzstelle mit einer entsprechenden Identifizierungseinrichtung ausgerüstet. Im einfachsten Fall kann es sich bei der Identifizierungseinrichtung um ein Tastaturfeld handeln, über welches der Identifizierungscode vom Benutzer eingegeben und auf Übereinstimmung mit dem auf der Wertkarte hinterlegten und einmal erzeugten Identifizierungscode verglichen wird. Nur dann, wenn bei diesem Vergleich eine Übereinstimmung festgestellt wird, ist die Akzeptanzstelle dahingehend autorisiert, die eine oder die mehreren auf der Wertkarte hinterlegten Sachleistungen an den Benutzer auszugeben.

Um die Identifizierung zu erleichtern, kann die Wertkarte mit einer biometrischen Erfassungseinrichtung zur Erfassung biometrischer Daten des Benutzers ausgerüstet sein. Dann mag die Hinterlegung des Identifizierungscodes im Speicher der Wertkarte und dessen Überprüfung mithilfe der Identifizierungseinrichtung an der Akzeptanzstelle auf den Abgleich der biometrischen Daten hinauslaufen.

Tatsächlich kann beispielsweise so vorgegangen werden, dass auf der Wertkarte als biometrische Erfassungseinrichtung ein Fingerabdruckscanner hinterlegt ist, welcher den Fingerabdruck als biometrische Daten bzw. Identifizierungscode des Benutzers im Speicher der Wertkarte hinterlegt. Genauso gut können die betreffenden Daten an einer Akzeptanzstelle ermittelt und in den Speicher der Wertkarte geschrieben werden. Wenn nun der Benutzer die auf der Wertkarte abgespeicherten Sachleistungen an der gewünschten Akzeptanzstelle abrufen möchte, so ist es lediglich erforderlich, dass er sich als berechtigter Benutzer an der betreffenden Akzeptanzstelle mit den zugehörigen biometrischen Daten ausweist. Dazu sind ausgewählte oder alle Akzeptanzstellen mit einer Leseeinheit/Erfassungseinheit für die entsprechenden biometrischen Daten des Benutzers der Wertkarte ausgerüstet.

Auch in diesem Fall mag es sich um einen Fingerabdruckscanner handeln. Stimmt der mithilfe des Fingerabdruckscanners an der Akzeptanzstelle erfasste Fingerabdruck des Benutzers der Wertkarte mit dem denjenigen Fingerabdruck überein, wie er im Speicher der Wertkarte hinterlegt ist, so wird die auf der Wertkarte abgespeicherte Sachleistung an der betreffenden Akzeptanzstelle ausgegeben. - Selbstverständlich kann die erfindungsgemäße Wertkarte auch gänzlich ohne Identifizierungscode ausgelegt sein. In Anbetracht der zum Teil hierauf befindlichen hohen Sachwerte wird man jedoch üblicherweise mit dem genannten Identifizierungscode bzw. dem beschriebenen Abgleich der biometrischen Daten arbeiten, um Diebstahl und Missbrauch zu verhindern.

In die gleiche Richtung zielen Vorschläge der Erfindung, im Speicher mehrere Transaktionsnummern zu hinterlegen. Mithilfe der Transaktionsnummern kann ein Datenverkehr zwischen der Wertkarte und der jeweiligen Akzeptanzstelle gesichert werden. Tatsächlich wird man in diesem Zusammenhang beispielsweise so vorgehen, dass beim Erwerb der betreffenden Wertkarte und dem Aufladevorgang mit der einen oder den mehreren Sachleistungen beispielsweise für jede Sachleistung eine eigene Transaktionsnummer im Speicher der Wertkarte hinterlegt wird. Soll nun die auf der Wertkarte hinterlegte betreffende Sachleistung an der gewünschten Akzeptanzstelle angefordert werden, so überprüft ein mit den einzelnen Akzeptanzstellen verbundener Zentralrechner, ob die dort hinterlegte Transaktionsnummer zu der beim Erwerb abgespeicherten Transaktionsnummer und der betreffenden Sachleistung "passt". Nur wenn dies der Fall ist und sich der Benutzer zugleich als berechtigt über beispielsweise den Identifizierungscode ausgewiesen hat, wird die Sachleistung an der Akzeptanzstelle ausgegeben bzw. erbracht.

Es besteht die Möglichkeit, die Wertkarte je nach Akzeptanzstelle bzw. je nach Akzeptanzstellenzugehörigkeit zu individualisieren. Bekanntermaßen kann die Wertkarte an der Akzeptanzstelle im Regelfall erworben, mit den betreffenden Sachleistungen aufgeladen und auch wieder entwertet werden, in dem an der betreffenden Akzeptanzstelle die hinterlegte Sachleistung erbracht wird. Dabei ist es möglich, dass die Akzeptanzstelle lediglich als Aufwertestelle ausgebildet ist, also nur zum Erwerb und zum Aufladen der betreffenden Wertkarte geeignet ist. Neben solchen Aufwertestellen gibt es auch als Ausgabestellen ausgelegte Akzeptanzstellen. Diese Ausgabestellen sind nur zur Ausgabe der Sachleistung eingerichtet, nicht aber zum Erwerb und zum Aufladen der betreffenden Werkkarte. Im Regelfall fungiert die jeweilige Akzeptanzstelle jedoch sowohl als Aufwertestelle als auch als Ausgabestelle.

Darüber hinaus lassen sich eine oder mehrere Akzeptanzstellen hinsichtlich ihrer Akzeptanzstellenzugehörigkeit zu einem Akzeptanzstellenkonglomerat zusammenfassen. Ein solches Akzeptanzstellenkonglomerat zeichnet sich beispielsweise dadurch aus, dass jeweils vergleichbare Sachleistungen erworben und ausgegeben werden können. Ein Beispiel für ein solches Akzeptanzstellenkonglomerat kann eine bestimmte Tankstellenkette sein. Außerdem sind Akzeptanzstellenkonglomerate in Gestalt einer Elektronikmarktkette, in Gestalt von Verkaufsläden für Mobiltelefone etc. denkbar.

Um nun die Wertkarte je nach Akzeptanzstelle bzw. Akzeptanzstellenzugehörigkeit zu individualisieren, bestehen verschiedene Möglichkeiten. Im Rahmen dieser Individualisierung wird die Wertkarte so ausgerüstet, dass ihre Akzeptanz innerhalb des zugehörigen Akzeptanzstellenkonglomerates gesichert ist, allerdings im Regelfall nur innerhalb des Akzeptanzstellenkonglomerates und nicht außerhalb. Diese Individualisierung kann beispielsweise durch einen Aufdruck und/oder eine Bildschirmanzeige und/oder einen Tongenerator zur akustischen Wiedergabe einer Erkennungstonfolge erfolgen. Durch die Möglichkeit zur Individualisierung wird der Kunde über das Akzeptanzstellenkonglomerat unterrichtet und zugleich an der gewünschten Akzeptanzstelle sichergestellt, dass die fragliche Wertkarte zur Ausgabe der gewünschten Sachleistung tatsächlich "passt".

Darüber hinaus hat es sich bewährt, wenn die Wertkarte mit einem Display zur Anzeige des Werteinhaltes des Speichers, des Verfalldatums und gegebenenfalls weiterer Daten wie beispielsweise des Inhabers etc. ausgerüstet ist. Dadurch wird ein Benutzer der Wertkarte über die wesentlichen hierauf abgespeicherten Daten informiert. Gleiches gilt beispielsweise für einen Mitarbeiter an einer gewünschten Akzeptanzstelle, welcher auf diese Weise die relevanten Daten der Wertkarte problemlos abfragen kann.

Gegenstand der Erfindung ist auch eine elektronische Steuereinheit, die mit einer implementierten Wertkarte der zuvor beschriebenen Ausgestaltung ausgerüstet ist. Dadurch, dass die fragliche Steuereinheit die implementierte Wertkarte mit den zuvor beschriebenen Eigenschaften beinhaltet, verfügt die Steuereinheit selbst über die fraglichen Eigenschaften der Wertkarte. Die Wertkarte kann in die Steuereinheit hardwaremäßig integriert sein. Hierzu mag die Steuereinheit über eine entsprechende Schnittstelle verfügen.

Ganz besonders bevorzugt ist es jedoch im Rahmen der Erfindung, wenn die Wertkarte softwaremäßig in der elektronischen Steuereinheit umgesetzt wird. In diesem Fall handelt es sich bei der Wertkarte letztlich um ein Computerprogramm, welches die Steuereinheit mit den zuvor beschriebenen Eigenschaften der Wertkarte ausrüstet, sobald das Computerprogramm in der fraglichen Steuereinheit läuft. Bei dem fraglichen Computerprogramm kann es sich im einfachsten Fall um eine sogenannte "App", also eine Anwendungssoftware handeln.

Dementsprechend kommen als elektronische Steuereinheiten im Rahmen der Erfindung sowohl stationäre Computer als auch mobile Computer wie beispielsweise Tablets aber auch Mobiltelefone etc. zum Einsatz. In diesen sämtlichen Fällen wird die elektronische Wertkarte besonders vorteilhaft softwaremäßig in der elektronischen Steuereinheit realisiert. Beispielsweise ist es denkbar, auf einem obligatorischen Display der fraglichen elektronischen Steuereinheit die Wertkarte wiederzugeben bzw. einen zu der Wertkarte korrespondierenden Code. Hierbei kann es sich um einen QR-Code, einen Barcode etc. handeln. Auf diese Weise lässt sich die letztlich auf dem Bildschirm erzeugte Wertkarte an der gewünschten Akzeptanzstelle abfragen und kann selbstverständlich auch wie beschrieben aufgeladen werden. Auch der angesprochene Aufdruck auf der Wertkarte lässt sich durch eine entsprechende Anzeige auf dem Display der elektronischen Steuereinheit umsetzen. Jedenfalls können vergleichbare Vorgänge und Transaktionen durchgeführt werden, als wenn die fragliche Wertkarte körperlich zur Verfügung steht. Tatsächlich übernimmt die elektronische Steuereinheit in diesem Fall in gewisser Weise die Funktion der Wertkarte und kann diese ersetzen.

Gegenstand der Erfindung ist auch ein Wertkartensystem, welches mit einer Mehrzahl an Akzeptanzstellen, und mit zumindest einer Wertkarte und/oder einer Steuereinheit mit der implementierten Wertkarte ausgerüstet ist. Die Wertkarte bzw. die Steuereinheit arbeitet dabei so, wie dies zuvor bereits im Detail beschrieben worden sind. Dabei verfügen ausgewählte oder alle Akzeptanzstellen über einen entsprechenden Generator für die zuvor bereits beschriebenen Transaktionsnummern. Neben dem Generator für die Transaktionsnummern werden die betreffenden Transaktionsnummern i. V. mit der zugehörigen Sachleistung auch in dem bereits angesprochenen Zentralrechner hinterlegt, so dass bei einer Ausgabe der auf Wertkarte abgespeicherten Sachleistungen an der gewünschten Akzeptanzstelle die Wirksamkeit der betreffenden Transaktionsnummer abgefragt werden kann.

Darüber hinaus sind ausgewählte oder alle Akzeptanzstellen mit einer Lese-/Tonaufnahmeeinrichtung für den Aufdruck und/oder die Bildschirmanzeige und/oder den Tongenerator auf der Wertkarte ausgerüstet. Mithilfe dieser Maßnahmen lässt sich die Wertkarte wie beschrieben individualisieren und kann über die Lese-/Tonaufnahmeeinrichtung an der gewünschten Akzeptanzstelle festgestellt werden, ob die entsprechend individualisierte Wertkarte zu der gewünschten Akzeptanzstelle passt oder nicht.

Der eigentliche Datenaustausch zwischen der erfindungsgemäßen Wertkarte bzw. der Steuereinheit und der zugehörigen Akzeptanzstelle erfolgt in der Regel über eine Sende-/Empfangseinheit, mit welcher ausgewählte oder alle Akzeptanzstellen ausgerüstet sind. Über diese Sende-/Empfangseinheit an der betreffenden Akzeptanzstelle erfolgt ein drahtloser/drahtgebundener Datenaustausch zwischen der betreffenden Akzeptanzstelle und der Wertkarte bzw. der Steuereinheit. Bei einem drahtgebunden Datenaustausch wird man im einfachsten Fall so vorgehen, dass die betreffende Wertkarte in einen Aufnahmeschlitz eingesteckt werden muss und dann an der Akzeptanzstelle die gewünschten Daten ausgelesen und mit den hinterlegten Daten wie beschrieben auf Übereinstimmung überprüft werden. Im Falle einer Steuereinheit wird an der Akzeptanzstelle regelmäßig der beispielsweise zur Wertkarte korrespondierende Code ausgelesen. Ist die Überprüfung positiv abgeschlossen, wird die vom Benutzer gewünschte Sachleistung ausgegeben.

Schließlich sind ausgewählte oder alle Akzeptanzstellen mit einer Lese-/Erfassungseinheit für die biometrischen Daten des Benutzers der Wertkarte bzw. der Steuereinheit mit der implementierten Wertkarte ausgerüstet, wie dies bereits beschrieben wurde. Hierbei handelt es sich vorteilhaft um einen Fingerabdruckscanner.

Im Ergebnis wird eine Wertkarte bzw. eine die Wertkarte beinhaltende Steuereinheit und ein zugehöriges Wertkartensystem zur Verfügung gestellt, welche bzw. welches den Warenverkehr und Warenerwerb sowie die Warenausgabe deutlich vereinfacht und die Nachfrage sowie Belastungsspitzen abmildert. Zugleich wird mit der betreffenden Wertkarte und dem dazugehörigen Wertkartensystem der "Spieltrieb" der Benutzer angeregt und ein vergleichbares Kauferlebnis wie bei Auktionen vermittelt. Dadurch lässt sich die Kundenbindung und Kundenzufriedenheit deutlich steigern. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Wertkarte schematisch und
- Fig. 2: ein zugehöriges Wertkartensystem in einer Übersicht.

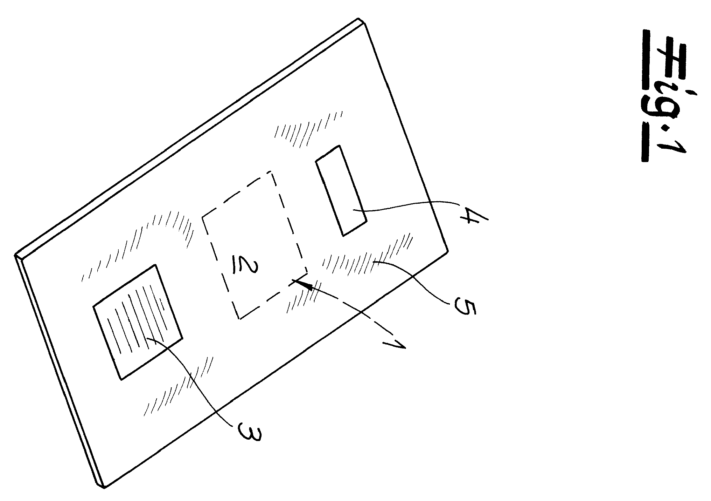

In der Fig. 1 ist eine Wertkarte dargestellt, die mit wenigstens einem Speicher 1 ausgerüstet ist. Im Speicher 1 wird unter anderem ein Werteinhalt W der Wertkarte hinterlegt. Hierbei handelt es sich im Rahmen der Erfindung ausschließlich um Sachleistungen mit vorgegebenem Umfang, beispielsweise 50 I Superbenzin.

Der Speicher 1 ist Bestandteil eines Mikroprozessors 2, der auf der Wertkarte angeordnet ist. An den Mikroprozessor 2 ist eine biometrische Erfassungseinrichtung 3 angeschlossen. Bei der biometrischen Erfassungseinrichtung 3 handelt es sich im Ausführungsbeispiel um einen Fingerabdruckscanner.

Mithilfe der biometrischen Erfassungseinrichtung 3 bzw. des Fingerabdruckscanners werden biometrische Daten des Benutzers ermittelt und an den Mikroprozessor 2 übermittelt sowie im dortigen Speicher 1 hinterlegt. Darüber hinaus sind im Speicher 1 noch mehrere Transaktionsnummern TAN hinterlegt, um einen gesicherten Datenverkehr zwischen der in der Fig. 1 dargestellten Wertkarte und einer Akzeptanzstelle 6 zu gewährleisten.

Man erkennt schließlich noch, dass die Wertkarte in der Fig. 1 darüber hinaus mit einem Display 4 sowie schließlich einem Aufdruck 5 ausgerüstet ist. Mithilfe des Displays 4 kann beispielsweise der Werteinhalt W des Speichers 1 angezeigt und ausgegeben werden. Außerdem lassen sich hiermit ein etwaiges Verfallsdatum des Werteinhaltes W und auch der Inhaber identifizieren.

Der Aufdruck 5 dient demgegenüber zur Individualisierung der Wertkarte. Alternativ zu dem Aufdruck 5 kann auch mit einer Bildschirmanzeige auf dem Display 4 respektive einem Tongenerator zur akustischen Wiedergabe einer Erkennungstonfolge gearbeitet werden, was jedoch nicht dargestellt ist. Über den Aufdruck 5 lässt sich die Wertkarte individualisieren, und zwar dergestalt, dass ihre Zugehörigkeit zu einem bestimmten Akzeptanzstellenkonglomerat dokumentiert wird. Bei diesem Akzeptanzstellenkonglomerat mag es sich im Beispielfall um eine Tankstellenkette handeln, bei welcher die auf der Wertkarte abgespeicherte Sachleistung, im Ausführungsbeispiel die 50 I Superbenzin, eingelöst und abgerufen werden können.

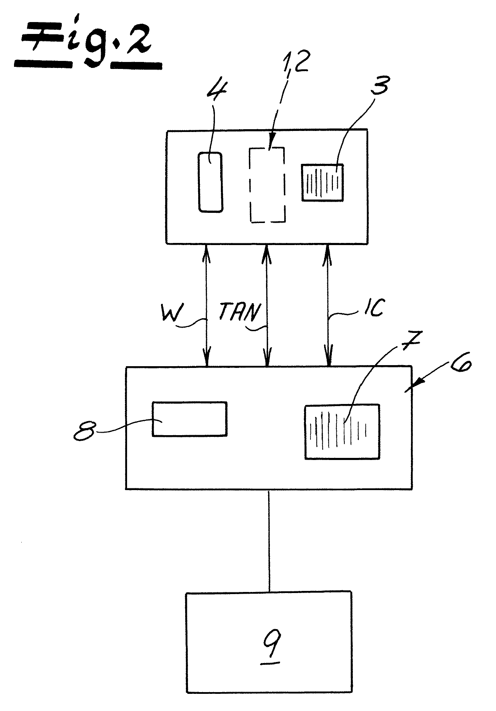

Wie bereits einleitend erläutert, ist die hinterlegte Sachleistung, die 50 I Superbenzin im Beispielfall, mit einem Verfallsdatum flankiert. Dieses Verfallsdatum mag beispielsweise zu einem Verfallszeitraum von zwei Monaten gehören, welcher mit dem Kaufdatum zu laufen beginnt. Tatsächlich wird die betreffende Wertkarte an der zugehörigen Akzeptanzstelle 6 erworben und mit dem vom Kunden gewünschten Werteinhalt W aufgeladen. Dazu muss der Kunde den zu den 50 I Superbenzin im Beispielfall gehörigen Einkaufspreis am Kaufdatum an der Akzeptanzstelle 6 entrichten. Dadurch wird der entsprechende Werteinhalt W (50 I Superbenzin) von der Akzeptanzstelle 6 an die Wertkarte übermittelt, wie dies durch den Doppelpfeil in der Fig. 2 angedeutet ist. Der genannte Werteinhalt W wird in den Speicher 1 eingeschrieben.

Zugleich wird im Speicher 1 ein Identifizierungscode IC zur Authentifizierung des Nutzers hinterlegt. Dieser Identifizierungscode IC wird im Beispielfall mithilfe der biometrischen Erfassungseinrichtung 3 auf der Wertkarte direkt erzeugt und im Speicher 1 abgelegt.

Alternativ hierzu ist es auch möglich, entsprechend der Darstellung in der Fig. 2 die Akzeptanzstelle 6 mit einer zur Erfassungseinrichtung 3 vergleichbaren Leseeinheit/Erfassungseinheit 7 für solche biometrischen Daten des Benutzers auszurüsten. In diesem Fall werden die biometrischen Daten des Benutzers mithilfe der Leseeinheit/Erfassungseinheit 7 an der betreffenden Akzeptanzstelle 6 erfasst und als Identifizierungscode IC zur Authentifizierung des Nutzers im Speicher 1 hinterlegt, wie dies der Doppelpfeil in der Fig. 2 andeutet. Schließlich ist die in der Fig. 2 gezeigte Akzeptanzstelle 6 mit einem Generator 8 für Transaktionsnummern TAN ausgerüstet. Mithilfe des Generators 8 wird im Beispielfall wenigstens eine zur gewünschten Sachleistung bzw. dem Werteinhalt W gehörige Transaktionsnummer TAN erzeugt und beim Kauf des Werteinhaltes W zugleich im Speicher 1 und auch einer Zentrale 9 bzw. in einem Zentralrechner hinterlegt. Das ist erneut in der Fig. 2 angedeutet.

Bei der in Fig. 2 dargestellten Akzeptanzstelle 6, handelt es sich um eine solche, welche sowohl als Aufwertestelle als auch als Ausgabestelle arbeitet. Das heißt, an der betreffenden Akzeptanzstelle 6 kann die Wertkarte erworben und mit der gewünschten Sachleistung im vorgegebenen Umfang aufgeladen werden. Als Folge hiervon wird der vom Benutzer erworbene Werteinhalt W in den Speicher 1 eingeschrieben. Zugleich fungiert die in der Fig. 2 dargestellte Akzeptanzstelle 6 als Ausgabestelle. In diesem Fall nutzt der Benutzer die Wertkarte dahingehend, bei der betreffenden Akzeptanzstelle 6 die Ausgabe der auf der Wertkarte abgespeicherten Sachleitung, im Ausführungsbeispiel die Ausgabe der 50 I Superbenzin, zu bewirken.

Um nun die auf der Wertkarte hinterlegte Sachleitung bei der Akzeptanzstelle 6 abzurufen, wird zunächst die Berechtigung des Benutzers durch eine Prüfung der Authentifizierung des Nutzers an der Akzeptanzstelle 6 überprüft. Dazu übermittelt die Wertkarte den im Speicher 1 hinterlegten Identifizierungscode IC. Hierbei handelt es sich im beschriebenen Beispielfall um den Fingerabdruck, welcher mit dem Fingerabdruck des Benutzers an der Akzeptanzstelle 6 verglichen wird. Der an der Lese-/Erfassungseinheit 7 der Akzeptanzstelle 6 ermittelte Fingerabdruck wird dazu mit den als Identifizierungscode IC im Speicher 1 der Wertkarte hinterlegten biometrischen Daten des Benutzers verglichen. Bei Übereinstimmung der Daten wird die Ausgabe der Sachleistung freigeschaltet, wenn zugleich bei der Kommunikation die zu der Sachleistung hinterlegte Transaktionsnummer TAN auf ihre Gültigkeit hin überprüft worden ist.

Die Gültigkeit der zu der gewünschten Sachleistung gehörigen Transaktionsnummer wird an der Akzeptanzstelle 6 derart überprüft, dass die von der Wertkarte übermittelt Transaktionsnummer TAN mit einer beim damaligen Kaufvorgang erzeugten und in einer Zentrale 9 abgespeicherten zulässigen Transaktionsnummer TAN abgeglichen und auf Übereinstimmung hin überprüft wird. Ist die Transaktionsnummer für die gewünschte Sachleistung bzw. den Werteinhalt W gültig, so wird an der Akzeptanzstelle 6 die zum Werteinhalt W korrespondierende Sachleistung ausgegeben, erfolgt im Beispielfall die Ausgabe der 50 I Superbenzin.

Der Datenaustausch zwischen der Wertkarte und der gewünschten Akzeptanzstelle 6 erfolgt vorliegend drahtlos, wie dies die Fig. 2 durch die entsprechenden Doppelpfeile andeutet. Es kann selbstverständlich aber auch ein drahtgebundener Datenaustausch zwischen der Wertkarte und der Akzeptanzstelle 6 erfolgen.

Die in der Fig. 1 dargestellte Wertkarte kann grundsätzlich auch in eine nichtdargestellte Steuereinheit integriert werden. Die Funktionsweise der Wertkarte übernimmt in diesem Fall die fragliche Steuereinheit. Hierbei kann es sich um einen stationären oder mobilen Computer oder auch ein Mobiltelefon handeln. In diesem Fall übernimmt die fragliche elektronische Steuereinheit die Funktion der Wertkarte. Insbesondere kann das bei einer solchen elektronischen Steuereinheit obligatorische Display 4 unmittelbar genutzt werden, um den im Speicher 1 der fraglichen Steuereinheit hinterlegten Werteinhalt W der Wertkarte wiederzugeben. Der Mikroprozessor 2 ist in diesem Fall in die Steuereinheit integriert. Gleiches gilt für die Erfassungeinrichtung 3 und auch den Speicher 1. Der Aufdruck 5 kann auf dem Display 4 als Bestandteil der fraglichen elektronischen Steuereinheit wiedergegeben werden. Insofern ist die gesamte Wertkarte in der Steuereinheit implementiert. Das kann hardware- oder softwaremäßig erfolgen.

Im erstgenannten Fall wird die fragliche Wertkarte beispielsweise in einem Leseschlitz der elektronischen Steuereinheit aufgenommen. Allgemein findet dann ein Datenaustausch zwischen der hardwaremäßig realisierten Wertkarte und der fraglichen elektronischen Steuereinheit statt. Im Allgemeinen ist die Wertkarte jedoch softwaremäßig in die fragliche elektronische Steuereinheit integriert. Dann wird die Wertkarte bzw. werden dessen Funktionen mithilfe eines (Anwender)Computerprogramms auf der fraglichen Steuereinheit realisiert und umgesetzt. An dem zuvor bereits beschriebenen Datenaustausch der gleichsam in die elektronische Steuereinheit implementierten Wertkarte mit der Akzeptanzstelle 6 nach Fig. 2 ändert sich jedoch nichts.

## Patentansprüche

1. Elektronische Wertkarte, mit wenigstens einem Speicher (2), dessen Werteinhalt (W) an einer Akzeptanzstelle (6) auf- bzw. abgewertet wird, **dadurch gekennzeichnet, dass** als Werteinhalt (W) ausschließlich Sachleistungen mit vorgegebenem Umfang im Speicher (1) hinterlegt sind.

2. Wertkarte nach Anspruch 1, **dadurch gekennzeichnet, dass** die Sachleistungen hinsichtlich ihres Gesamtumfangs und/oder eines oder mehrerer Teilumfänge mit wenigstens einem Verfallsdatum flankiert sind.

3. Wertkarte nach Anspruch 2, **dadurch gekennzeichnet, dass** das Verfallsdatum an einer Aufwertestelle vorgegeben wird und/oder verlängerbar ist.

4. Wertkarte nach einem der Ansprüche 1 bis 3, **dadurch gekennzeichnet, dass** zusätzlich ein Identifizierungscode (IC) zur Authentifizierung des Nutzers im Speicher (1) hinterlegt ist.

5. Wertkarte nach einem Ansprüche 1 bis 4, **dadurch gekennzeichnet, dass** im Speicher (1) mehrere Transaktionsnummern (TAN) hinterlegt sind, um einen gesicherten Datenverkehr zwischen der Wertkarte und der jeweiligen Akzeptanzstelle (6) sicherzustellen.

6. Wertkarte nach einem der Ansprüche 1 bis 5, **dadurch gekennzeichnet, dass** die Wertkarte je nach Akzeptanzstelle (6) individualisiert ist, beispielsweise durch einen Aufdruck (5) und/oder eine Bildschirmanzeige und/oder einen Tongenerator zur akustischen Wiedergabe einer Erkennungstonfolge.

7. Wertkarte nach einem der Ansprüche 1 bis 6, **dadurch gekennzeichnet, dass** ein Display (4) zur Anzeige des Werteinhaltes (W) des Speichers (1), des Verfalldatums und gegebenenfalls des Inhabers vorgesehen ist.

8. Wertkarte nach einem der Ansprüche 1 bis 7, **dadurch gekennzeichnet, dass** eine biometrische Erfassungseinrichtung (3) zur Erfassung biometrischer Daten des Benutzers vorgesehen ist.

9. Elektronische Steuereinheit, mit einer implementierten Wertkarte nach einem der Ansprüche 1 bis 8.

10. Wertkartensystem, mit einer Mehrzahl an Akzeptanzstellen (6), und mit zumindest einer Wertkarte und/oder einer Steuereinheit mit der implementierten Wertkarte, **dadurch gekennzeichnet, dass** die Wertkarte nach einem der Ansprüche 1 bis 8 ausgebildet ist.

11. Wertkartensystem nach Anspruch 10, **dadurch gekennzeichnet, dass** ausgewählte oder alle Akzeptanzstellen (6) mit einem Generator (8) für Transaktionsnummern (TAN) ausgerüstet sind.

12. Wertkartensystem nach Anspruch 10 oder 11, **dadurch gekennzeichnet, dass** ausgewählte oder alle Akzeptanzstellen (6) eine Lese-/Erfassungseinheit (7) für biometrische Daten des Benutzers der Wertkarte aufweisen.

13. Wertkartensystem nach einem der Ansprüche 10 bis 12, **dadurch gekennzeichnet, dass** ausgewählte oder alle Akzeptanzstellen (6) eine Lese-/Tonaufnahmeeinrichtung für den Aufdruck (5) und/oder die Bildschirmanzeige und/oder den Tongenerator auf der Wertkarte aufweisen.

14. Wertkartensystem nach einem der Ansprüche 9 bis 13, **dadurch gekennzeichnet, dass** ausgewählte oder alle Akzeptanzstellen (6) mit einer Sende-/Empfangseinheit zur drahtlosen/datengebundenen Datenaustausch mit der Wertkarte ausgerüstet sind.
